**Europäisches Patentamt**

**European Patent Office**

**Office européen des brevets**

(19)

(11) Veröffentlichungsnummer : **0 406 548 B1**

(12) **EUROPÄISCHE PATENTSCHRIFT**

(45) Veröffentlichungstag der Patentschrift :
28.10.92 Patentblatt 92/44

(51) Int. Cl.$^5$ : **F16B 13/14, F16B 13/06**

(21) Anmeldenummer : **90109479.7**

(22) Anmeldetag : **18.05.90**

(54) **Verankerung eines Gewindebolzens mittels einer Verbundmasse.**

(30) Priorität : **01.07.89 DE 3921697**

(43) Veröffentlichungstag der Anmeldung :
**09.01.91 Patentblatt 91/02**

(45) Bekanntmachung des Hinweises auf die
Patenterteilung :
**28.10.92 Patentblatt 92/44**

(84) Benannte Vertragsstaaten :
**AT BE CH DE DK ES FR GB IT LI NL**

(56) Entgegenhaltungen :
**WO-A-89/00648**
**AT-B- 291 508**
**CH-A- 635 173**
**DE-A- 3 516 866**

(73) Patentinhaber : **fischerwerke Artur Fischer
GmbH & Co. KG
Weinhalde 14 - 18
W-7244 Waldachtal 3/Tumlingen (DE)**

(72) Erfinder : **Fischer, Artur, Prof., Dr. h.c.
Weinhalde 34
W-7244 Waldachtal 3/Tumlingen (DE)**

EP 0 406 548 B1

**Beschreibung**

Die Erfindung betrifft eine Verankerung eines Gewindebolzens mittels einer Verbundmasse in einem mit einer zum Bohrlochgrund sich erweiternden Hinterschneidung versehenen Bohrloch eines Betonteiles.

Aus der DE-OS 35 16 866 ist eine der obigen Gattung entsprechende Verankerung bekannt. Der Gewindebolzen gemäß dieser Druckschrift weist an seinem einführseitigen Stirnende eine konische Erweiterung auf, deren größter Außendurchmesser zum Einführen durch den zylindrischen Teil des Bohrloches etwas kleiner ist als der Bohrlochdurchmesser. Dadurch beruht die Verankerungswirkung dieses Gewindebolzens ausschließlich auf der Scherwirkung der ausgehärteten Verbundmasse. Diese Scherwirkung reicht zwar in ungerissenem Beton aus, um hohe Haltewerte zu erreichen. Wird jedoch eine solche Verankerung in der Zugzone eines Betonteiles ausgeführt, bei der nach der Verankerung des Befestigungselementes durch Zugspannungen durch den Befestigungspunkt laufende Risse entstehen können, löst sich die Verbundmasse an der Bohrlochwandung ab. Ein in einem ausschließlich zylindrischen Bohrloch gesetzter Gewindebolzen kann somit keine Haltekräfte mehr aufnehmen. Bei dem Gewindebolzen nach der DE-OS ergibt sich zwar die gleiche Wirkung für die Verankerung im Bereich des zylindrischen Teils des Bohrloches, im Bereich der Hinterschneidung wird jedoch ein Formschluß erzielt, der einen totalen Abfall der Haltekraft verhindert. Allerdings beruht die Haltekraft ausschließlich auf der Scherfestigkeit der Verbundmasse im Bereich der Hinterschneidung, die jedoch erheblich geringer ist als die Ausbruchfestigkeit des Betons.

Der Erfindung liegt daher die Aufgabe zugrunde, eine Verankerung für einen Gewindebolzen mittels einer Verbundmasse zu schaffen, die bei Auftreten von Rissen einen Abfall der Haltekraft vermeidet bzw. wesentlich vermindert.

Die Lösung dieser Aufgabe wird bei einer Verankerung der eingangs genannten Gattung durch die im Hauptanspruch angegebenen Merkmale erreicht. Aufgrund dieser Merkmale beruht die Verankerungswirkung des erfindungsgemäßen Gewindebolzens auf der Kombination eines Verbund- und Hinterschnittankersystems. In ungerissenem Beton ergibt sich aufgrund der hohen Haftfähigkeit der Verbundmasse auf der ganzen Länge des Bohrloches eine sehr hohe Auszugskraft ohne Spreizdruck, das geringe Rand- und Achsabstände zuläßt. Durch die zusätzliche, die Hinterschneidung weitgehend ausfüllende Spreizmöglichkeit des Gewindebolzens wird ein mechanischer Formschluß erreicht, der alleine aufgrund des Formschlusses eine die Tragfähigkeit des Betons voll nutzende Auszugskraft ermöglicht. Dadurch tritt bei Ablösung der Verbundmasse von der Bohrlochwandung bei einer Bohrlocherweiterung durch Risse kein wesentlicher Abfall der Haltekraft ein.

Der an der Stirnseite des Konusbolzens angeordnete dachförmige Vorsprung dient zur Zerstörung und Vermengung der in einer Glasampulle eingefüllten Zweikomponenten-Verbundmasse. Sobald der Konusbolzen am Bohrlochgrund aufsitzt, dringt die Schneide des Vorsprunges in den Bohrlochgrund ein und stoppt die durch die Mitnahme mit dem Gewindebolzen sich ergebende Drehbewegung des Konusbolzens. Durch die weitere Drehung des Gewindebolzens wird dieser nunmehr auf den stehenden Konusbolzen aufgeschraubt, so daß sich die Spreizsegmente über den Konus des Konusbolzens in die Hinterschneidung des Bohrloches schieben.

Zur Verbesserung der Drehsicherung des Konusbolzens beim Aufsitzen auf dem Bohrlochgrund kann die Stirnkante des Konusbolzens mit einem Rändelkranz versehen sein.

Um das Mitdrehen des Konusbolzens zur Zerstörung der Verbundpatrone und Vermengen der Verbundmasse sicherzustellen, ist zwischen dem Gewindeabschnitt und dem Spreizkonus des Konusbolzens ein Bund angeordnet, der zum Spreizkonus hin einen Absatz bildet, an dem die Spreizelemente des Gewindebolzens anstoßen.

Zum Drehen des Gewindebolzens weist dieser an seinem hinteren Stirnende Mittel zum Ansetzen eines Drehwerkzeuges auf.

Die Erfindung wird nachfolgend anhand der Zeichnung naher erläutert.

Es zeigen:

Figur 1 die Verankerung während der Eintreibphase des erfindungsgemäßen Gewindebolzens,

Figur 2 den im Hinterschnittbohrloch verankerten Gewindebolzen.

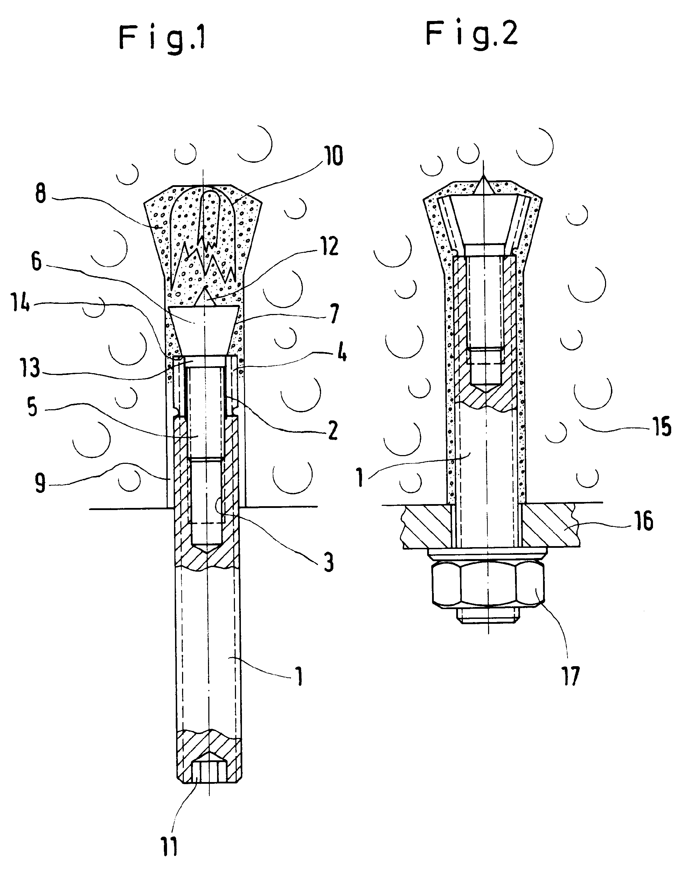

Der in Figur 1 dargestellte Gewindebolzen 1 weist an seinem vorderen Stirnende eine Bohrung 2 auf, an die sich ein Innengewinde 3 anschließt. Durch im Bereich der Bohrung angeordnete Längsschlitze 4 entstehen Spreizsegmente, die beim Aufdrehen des Gewindebolzens 1 auf den Gewindeabschnitt 5 des Konusbolzens 6 durch dessen Spreizkonus 7 aufspreizbar sind.

Zur Verankerung des Gewindebolzens 1 wird in das mit einer Hinterschneidung 8 versehene Bohrloch 9 eine Glasampulle 10 eingeschoben, die mit der auf zwei Komponenten basierenden Verbundmasse gefüllt ist. Mit einem in den Innensechskant 11 des Gewindebolzens 1 eingesteckten und in einen Bohrhammer eingespannten Drehwerkzeug (nicht dargestellt) wird der Gewindebolzen 1 mit aufgesetztem Konusbolzen 6 in das Bohrloch mit drehendem Gewindebolzen eingeschoben. Der mit seinem Gewindeabschnitt 5 im Innengewinde 3 des Gewindebolzens 1 gehaltene Konusbolzen 6 dreht ebenfalls mit, so daß der an der Stirnseite des Konusbolzens 6 angeordnete dachförmige Vorsprung 12 die Glasampulle 10 zerstört und die austretende Verbundmasse zur Auslösung des Aushärtvorganges vermengt.

Zwischen dem Gewindeabschnitt 5 und dem Spreizkonus 7 des Konusbolzens 6 ist ein zylindrischer Bund 13 angeordnet, der zum Spreizkonus 7 hin einen Absatz 14 bildet. An diesem Absatz stoßen die Spreizsegmente des Gewindebolzens 1 mit ihrer Stirnseite an. Dadurch wird ein erhöhter Einschraubwiderstand gebildet, der während der Einführphase des Gewindebolzens 1 das Mitdrehen des Konusbolzens 6 sicherstellt.

Trifft die Schneide des Vorsprunges 12 auf den Bohrlochgrund, wird die Drehung des Konusbolzens 6 schlagartig gestoppt. Durch den weiterhin auf den Gewindebolzen wirkenden Drehschlag des Bohrhammers, wird der Gewindebolzen 1 auf den Gewindeabschnitt 5 des Konusbolzens 6 aufgedreht und gleichzeitig die Spreizsegmente nach Überwindung des durch den Absatz 14 sich ergebenden Widerstandes auf den Spreizkonus 7 des Konusbolzens 6 geschoben. Dabei wird die in der Hinterschneidung 8 befindliche Verbundmasse verdrängt und der Spalt zwischen Gewindebolzen 1 und Bohrlochwandung vollständig ausgefüllt.

Nach dem Aushärten der Verbundmasse ist der Gewindebolzen 1 ordnungsgemäß verankert (siehe Figur 2). Auf das die Oberfläche des Betonteiles 15 überstehende Stück des Gewindebolzens 1 wird nunmehr der zu befestigende Gegenstand 16 mittels eines Mutter 17 befestigt.

## Patentansprüche

1. Verankerung eines Gewindebolzens mittels einer Verbundmasse in einem mit einer zum Bohrlochgrund sich erweiternden Hinterschneidung versehenen Bohrloch eines Betonteils, **dadurch gekennzeichnet**, daß der Gewindebolzen (1) an seinem einführseitigen vorderen Ende mit einer Bohrung (2) und daran anschließend mit einem Innengewinde (3) versehen ist, wobei im Bereich der Bohrung (2) Längsschlitze (4) zur Bildung von Spreizsegmenten angeordnet sind, und daß in dem Innengewinde (3) des Gewindebolzens (1) ein mit einem Gewindeabschnitt (5) versehener Konusbolzen (6) gehalten ist, der an seiner Stirnseite mit mindestens einem dachförmigen Vorsprung (12) versehen ist.

2. Verankerung nach Anspruch 1, **dadurch gekennzeichnet**, daß die Stirnkante des Konusbolzens (6) mit einem Rändelkranz versehen ist.

3. Verankerung nach Anspruch 1, **dadurch gekennzeichnet**, daß der Konusbolzen (6) zwischen seinem Gewindeabschnitt (5) und Spreizkonus (7) einen Bund (13) aufweist, der zum Spreizkonus einen Absatz (14) bildet, an dem die Spreizsegmente des Gewindebolzens (1) mit ihrer Stirnseite anliegen.

4. Verankerung nach Anspruch 1, **dadurch gekennzeichnet**, daß der Gewindebolzen an seinem hinteren Stirnende Mittel (11) zum Ansetzen eines Drehwerkzeuges aufweist.

## Claims

1. An anchorage of a threaded bolt by means of a compound mass in a drilled hole of a concrete part, the drilled hole being provided with an undercut that widens towards the bottom of the drilled hole, characterized in that the threaded bolt (1) is provided at its leading insertion end with a bore (2) and, continuing on from this, with an internal thread (3), longitudinal slots (4) being arranged in the region of the bore (2) to form expansible segments, and in the internal thread (3) of the threaded bolt (1) there is held a tapered bolt (6) provided with a threaded portion (5), which bolt is provided at its end face with at least one roof-shaped projection (12).

2. An anchorage according to claim 1, characterized in that the end face edge of the tapered bolt (6) is provided with a knurled rim.

3. An anchorage according to claim 1, characterized in that the tapered bolt (6) has between its threaded portion (5) and expander cone (7) a collar (13) which, at the expander cone, forms a shoulder (14) against which the expansible segments of the threaded bolt (1) lie with their end faces.

4. An anchorage according to claim 1, characterized in that, at its rearward end face, the threaded bolt has means (11) for the engagement of a turning tool.

## Revendications

1. Ancrage, au moyen d'une matière composite, d'une cheville filetée dans un trou présentant une contre-dépouille, qui s'évase vers le fond de ce trou, foré dans un élément en béton, ancrage caractérisé en ce que la cheville filetée (1) comporte, à son extrémité antérieure d'entrée, un alésage (2) auquel fait suite un taraudage (3), des fentes longitudinales (4), destinées à former des segments expansibles, étant formées à hauteur de cet alésage (2), et en ce qu'un goujon conique (6), qui comporte une partie filetée (5) et sur sa face d'extrémité au moins une dent (12), en forme de toit, est maintenu dans ce filetage (3) de la cheville (1).

2. Ancrage selon la revendication 1, caractérisé en ce que la périphérie de la face antérieure du goujon conique (6) est moletée.

3. Ancrage selon la revendication 1, caractérisé en ce que le goujon conique (6) comporte, entre sa partie filetée (5) et son cône dilatateur (7), un collet (13) qui forme, du côté de ce cône, un épaulement (14) contre lequel butent les segments expansibles de la cheville filetée (1).

4. Ancrage selon la revendication 1, caractérisé en ce que la cheville filetée (1) comporte sur sa face postérieure un logement (11) destiné à recevoir un outil d'entraînement en rotation.

# Fig.1

# Fig.2